# EUROPEAN PATENT APPLICATION

(11) **EP 0 953 946 A2**
(43) Date of publication of application: **03.11.1999**
(21) Application number: 99303204.4
(22) Date of filing: 26.04.1999
(51) Int. Cl.: G07F 19/00, H04L 29/06

(54) **Transaction networks**

(30) Priority: 29.04.1998 GB 9808995; 12.01.1999 US 229045
(71) Applicant: NCR INTERNATIONAL INC., Dayton, Ohio 45479 (US)
(72) Inventor: Coutts, Michael G., Dundee, Scotland DD2 5RJ (GB); Dove, Lee G., Coupar Angus, Perthshire PH13 9HS (GB)
(74) Representative: Cleary, Fidelma

(57) **Abstract**

A transaction network (30 or 60) comprises a plurality of terminals, for example an ATM (50 or 62), Each terminal (50 or 62) comprises a plurality of peripherals (52 or 64) such as a user interface (64d), card reader (64a), receipt printer (64b) and cash dispenser (64c). The application software for the peripherals (52 or 64) is held in a central server (34) located externally of the terminal (52 or 62) and linked to each peripheral (52 or 64) by a communication link (33,54,55, or 71). The link (33,54,55, or 71) extends to the individual peripherals (52 or 64) so that each peripheral is a direct client of the server (34).

Additionally the individual peripherals (52 or 64) are connected to each other over the link (33,54,55 or 71) to enable them to communicate directly with each other on a peer-to-peer basis. A banking information database (legacy Host) (12) is connected to the server (34).

## Description

This invention relates to transaction networks. In particular, the invention relates to self service terminal (SST) transaction networks such as automated teller machine (ATM) transaction networks. The invention also relates to terminals for use in transaction networks, and to peripheral devices for use in such terminals.

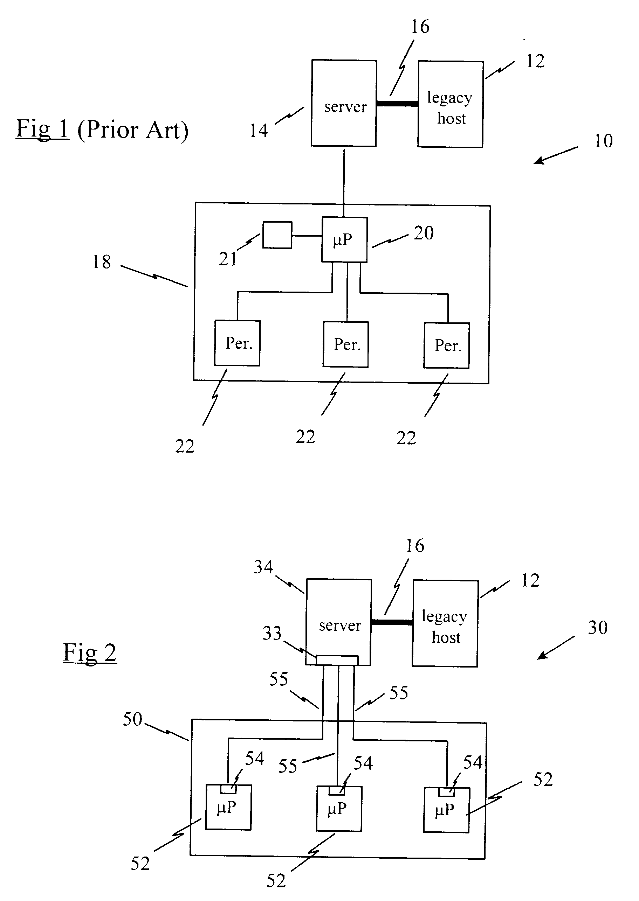

Transaction networks comprise one or more transaction terminals connected to a server. Typical transaction networks may be used to provide banking or retail services. A typical transaction terminal may be an SST (one type of SST being an ATM, another type of SST being a retail point-of-sale (PoS) terminal, yet another type of SST being a financial services centre (FSC)). Fig 1 shows part of a prior art ATM network 10 in which an information database 12 (termed a legacy host) is connected to a server 14 by a communication cable 16. The server 14 is also connected to a terminal 18 having a central processor 20, typically PC-based, which controls the application flow (the order in which events may occur) and the associated user interface presentation for the terminal 18. Application software and the graphics, animation and sound files used by the application software are stored on a hard disk 21 or other mass storage device within the terminal 18.

The network 10 is shown having one terminal 18, however, a plurality of other terminals, which may be of the same or of a different kind (ATM, PoS terminal, FSC, or such like), may also be connected to the server 14. Simple client-server transactions are conducted between terminal 18 and the host 12 for obtaining specific customer information used in the processing of a customer's transaction. In the case of an ATM the transaction may typically be a cash withdrawal or a balance request. In the case of a retail PoS terminal a typical transaction is a price lookup.

Terminal 18 includes peripheral devices 22 (referred to hereinafter as "peripherals") that are typically very specific to the function of the terminal 18. Typical peripherals included in an ATM are a card reader, a cash dispenser, a receipt printer and an encrypting keyboard. These devices must be provided with appropriate control software and require some form of embedded processing capability to conduct communications with the central processor 20 and to implement commands received therefrom.

The above architecture (as shown in Fig 1) has a number of disadvantages. The main task of the central processor 20 is to present information, graphics and animation to the user. However the processor 20 is also required to conduct control and possibly maintenance operations on the peripherals 22 connected to it. To obtain a high level of user interface performance, processor 20 must be very powerful because the processor 20 has to allocate some of its processing power for controlling the operation of the peripherals 22.

The peripherals 22 act as simple command processing systems, with all application control being conducted from the central processor 20. This is despite the fact that each peripheral 22 usually has an embedded processor. Thus, peripheral processing capability is not well utilised.

It is an object of the invention to provide a transaction network which obviates or mitigates one or more of the above disadvantages.

According to a first aspect of the invention a transaction network comprises a server and at least one terminal, each terminal having a plurality of peripherals, the network being characterised in that the server is arranged to store software for the peripherals, and communication links are provided from the server to each peripheral, whereby each peripheral is operable to download software from the server.

Preferably, each peripheral is operable to configure itself using the downloaded software. Preferably, the software is downloaded directly from the server.

By virtue of the present invention each peripheral has direct and independent access to the server. By enabling each peripheral to download software directly from the server and thereby to configure itself, each peripheral can operate autonomously. This means that in a transaction terminal containing such autonomous peripherals no central processor is required (which in prior art terminals controls the operation of the peripherals) nor is a mass storage device required (which in prior art terminals stores software required by the peripherals). Each peripheral is a direct client of the server.

Preferably, the software stored on the server includes application software and peripheral driver software.

Each peripheral has its own embedded processor which operates with the communication links to download software from the server.

Each peripheral includes hardware control means to control the hardware of the peripheral, and the embedded processor may operate the hardware control means in a manner determined by the downloaded software.

The software stored for each peripheral may be independent of the software for each of the other peripherals so that each peripheral can download software relating only to that peripheral (i.e. itself) ; thus, the software may comprise a plurality of independent software modules, so that each peripheral may download only the software module or modules required by that peripheral. For example, a card reader peripheral would not download software modules relating to a receipt printer.

Preferably, each peripheral stores downloaded software in volatile memory. Conveniently, the volatile memory is DRAM or SRAM.

Preferably, each peripheral has a non-volatile memory for storing boot-up information, whereby, on powering the peripheral, the contents of the non-volatile memory may be used for initialising the peripheral. Conveniently, the non-volatile memory is FLASH EPROM.

The term communication links relates to communication hardware within each peripheral (peripheral communication hardware), communication hardware within the server (server communication hardware), and a communication medium over which the peripheral and server communication hardware communicate. The communication medium may be physical, such as a cable; or it may be non-physical, such as the atmosphere. The communication medium may comprise interconnected cables and routers to provide a connection between the peripheral and server communication hardware.

Preferably, the peripheral communication hardware is an ethernet card having a unique ethernet card address (a media access control [MAC] address). On powering up, each peripheral boots-up using the non-volatile memory to initiate a network session with the server. Software modules required by that peripheral (such as application software and/or operating system software) are then transmitted from the server to that peripheral.

Preferably, the peripherals communicate with the server using the TCP/IP protocol. Preferably, during the boot-up process the embedded processor initiates a network session with the server by sending the ethernet card MAC address associated with the processor to the server with a message to indicate that the peripheral has just powered-up and requires an IP address. Conveniently, this is implemented using the BOOTP protocol so that the peripheral broadcasts its MAC address to every device on the network; and the server responds by supplying an IP address to the peripheral using address resolution protocol (ARP) and a dynamic host configuration protocol (DHCP).

Preferably, the communication links also enable the peripherals in a terminal to communicate with each other. This communication may be direct and on a peer-to-peer basis.

The peripherals may be selected from the following non-exhaustive list of peripherals, namely: a user interface, a reader, a receipt printer and a cash dispenser. The reader may be a card reader for reading from and writing to magnetic stripe cards and/or Smart cards. Alternatively or additionally, the reader may be a Smart device reader for reading from and writing to devices such as Smart buttons, rings, and such like.

The communication links may be dedicated links, i.e. the links may be used exclusively for connecting the server to the terminal (for example, the communication links may be part of a LAN or a WAN). Alternatively they may comprise a modem and information signal transfer means for enabling transfer of signals from the modem through a public telephone network to a server.

Preferably, the communication links include a router for providing a single link to the server. One advantage of using a router is that data from the peripherals may be concentrated onto a single link; another advantage is that the router can ensure that communications between peripherals in the terminal are not transmitted to the server.

In embodiments of the invention there may be provided an information database (such as a banking or retail database) in communication with the server.

According to a second aspect of the invention a transaction terminal includes a plurality of peripherals, the terminal being characterised in that each peripheral has communication hardware for connecting to a server, whereby, in use, each peripheral is operable independently to access the server and to download software therefrom.

Preferably, the software is downloaded directly from the server to the embedded processor. Thus, the software is resident on the server until such time as the embedded processor requests the software; it is then downloaded by the processor to its associated volatile memory. The software is not resident for an extended period of time on a storage device located within the terminal but outside the peripheral.

The peripheral communication hardware may be in the form of an ethernet card. The ethernet card may implement the TCP/IP protocol.

According to a third aspect of the invention a transaction network system comprises a server and at least one terminal, each terminal containing a plurality of peripherals, the network system being characterised in that the server is arranged to store a plurality of independent software modules, where at least one software module is associated with each peripheral, and communication links are provided from the server to each peripheral, whereby each peripheral is operable to download one or more of the independent software modules from the server and to configure itself using the one or more downloaded software modules.

According to a fourth aspect of the invention there is provided a transaction terminal including a plurality of modular elements that intercommunicate through a sub-network using a network protocol, and a router that concentrates communications between the modular elements and a remote server through a single connection to the server.

Preferably, the modular elements are peripheral devices, and the network protocol used is the TCP/IP protocol.

According to a fifth aspect of the invention there is provided a peripheral device for use in a transaction terminal, the device including a dedicated processor, memory, and a port for receiving and sending information, whereby the device is configured for installing software by downloading the software from a remote server over a connected network using a remotely executing Dynamic Host Control Protocol service.

The peripheral device may include a web server facility for use with a remote terminal implementing a web browser facility, thereby providing remote state of health and diagnostic facilities.

According to a sixth aspect of the invention there is provided a transaction terminal comprising a plurality of networked peripheral devices each having its own data processor controlling operations of the device through execution of software modules downloaded to the device via a connected network.

The software modules may be applets.

According to a seventh aspect of the invention there is provided a transaction network system comprising a server and at least one terminal, each terminal containing a plurality of peripherals, the network system being characterised in that the server is arranged to store a plurality of independent software modules, where at least one software module is associated with each peripheral, and communication links are provided from the server to each peripheral, wherein the server is operable to reset the peripherals and download software modules to the peripherals after they power up.

This provides remote, centralised updating of the software modules used by the peripherals. A network administrator only has to update the modules stored on the server and instruct the server to re-boot the peripherals. When the peripherals re-boot, the newly installed software modules will be downloaded to the peripherals.

In the drawings,

Fig 1 is a block diagram of a prior art ATM-based transaction network.

Embodiments of the invention will now be described, by way of example, with reference to the rest of the accompanying drawings in which:
Fig 2 is a block diagram of a transaction network according to one embodiment of the invention;
Fig 3 is a block diagram of a transaction network according to another embodiment of the invention, showing a router connecting four peripherals in a terminal to a server;
Fig 4 is a block diagram showing one of the peripherals of Fig 3 in greater detail; and
Fig 5 is a flow chart relating to one of the peripherals of Fig 3.

Referring to Fig 2, there is shown therein a transaction network 30 including a legacy host 12, a server 34 and an ATM 50. The server 34 is very similar to server 14, the main difference being that server 34 stores software modules (such as application software and operating system software) for use by peripherals within the ATM 50. The ATM 50 has three peripherals 52, each having communications hardware 54. The communications hardware 54 in each peripheral 52 is directly connected to a communication port 33 in the server 34 by a separate communication medium 55 in the form of a data cable. The hardware 54, medium 55, and port 33 together form a communication link, so that each peripheral 52 has a separate communication link. However, having separate cables 55 connecting the server 34 to the peripherals 52 may be undesirable because of the proliferation of cables that would result from increasing the number of peripherals.

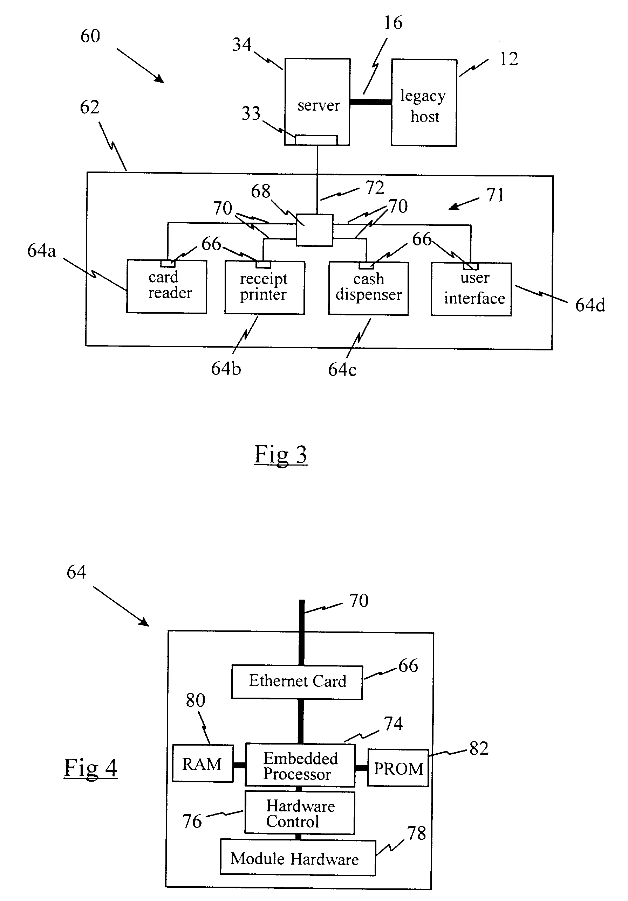

Fig 3 is a block diagram of an ATM transaction network 60 in accordance with another embodiment of the invention. ATM network 60 includes an ATM 62 which contains four peripherals 64: a card reader 64a, a receipt printer 64b, a cash dispenser 64c, and a user interface 64d.

Each peripheral 64 has a network interface 66 (in the form of an ethernet card, see Fig 4) which is physically connected to a multiport router 68 by a network cable 70. The router 68 receives data on each of the cables 70 (from the peripherals 64) and concentrates this data onto a single cable 72 for transmission to the communication port 33 in the server 34. The communication port 33, ethernet cards 66, router 68, network cables 70, and cable 72 together form a sub-network 71 to which the peripherals 64 and the server 34 are connected. The sub-network 71 implements the TCP/IP protocol and allows open standard connection between each peripheral 64 and the server 34, and also between different peripherals (e.g. 64a and 64b). Sub-network 71 thereby provides a communication link between a peripheral 64 and the server 34. Thus, there is a communication link for each peripheral 64, whereby each peripheral 64 is able to download software directly from the server 34.

Although the peripherals 64 are connected to the server 34 via the router 68, each peripheral 64 has independent access to the server 34 and is operable to download software modules directly therefrom (i.e. software modules are not first downloaded to an intermediate location and then copied to the peripherals 64 from the intermediate location). The router 68 does not store any software modules being downloaded, it merely facilitates downloading by managing the communication between the server 34 and the peripheral 64 which is downloading the software. It will be appreciated that the flow of information is two-way, a peripheral 64 being operable to transmit information to the server 34. It will also be appreciated that the ATM 62 has no mass storage device for permanently storing the downloaded software: all downloaded software is stored in memory. In this embodiment volatile memory is used; however, in an alternative embodiment non-volatile memory could cache downloaded software for immediate access on power-on with software updates being applied via the download process described.

Each type of peripheral (e.g. a card reader 64a) needs a different software module (or modules) to other types of peripherals (e.g. a receipt printer 64b); however, all peripherals of one type (e.g. all card readers 64a) need the same set of software modules. Therefore the server 34 stores a set of software modules for each type of peripheral (e.g. 64a) in the network 60; where a set of software modules may contain one or more software modules.

Fig 4 shows a block diagram of one of the peripherals 64 of Fig 3. The peripheral 64 has an ethernet card 66 (which is the peripheral communication hardware) having a unique MAC address. The ethernet card 66 implements the TCP/IP protocol, and is in electronic communication with an embedded processor 74. Processor 74 executes JAVA® code, and communicates with peripheral-specific control electronics 76 which controls the hardware 78 in the peripheral 64. For a card reader peripheral 64a, the hardware 78 includes the card transport mechanism and the magnetic stripe reader. The processor 74 also has associated volatile memory 80 in the form of DRAM and non-volatile memory 82 in the form of FLASH EPROM.

When a peripheral 64 is first powered-up, it requires an IP (internet protocol) address. IP addresses are supplied by the server 34 which implements an ARP (address resolution protocol) and DHCP (dynamic host control protocol) service for allocating an IP address to each peripheral 64 which is connected to the sub-network 71. DHCP is a standard protocol which provides a way of dynamically allocating IP addresses to processors in a network. A range of IP addresses is assigned to the DHCP and each processor is configured to request an IP address from the DHCP server. The request and grant process uses a lease concept with a controllable time period for the lease.

When a peripheral 64 is first powered-up, its processor 74 uses FLASH EPROM 82 to boot-up and broadcast a message requesting an IP address. The broadcast message contains the peripheral's MAC address and a special "broadcast address", which is "255.255.255.255". This broadcast address is a standard feature of the BOOTP protocol; it means, transmit to every device on the sub-network 71 that a peripheral with enclosed MAC address requires an IP address. The server 34 receives this broadcast message; allocates an available IP address; and sends a grant message to the peripheral which requested the IP address (using the peripheral's MAC address), where the grant message contains the peripheral's IP address and the server's IP address.

The newly-powered-up peripheral 64 receives this grant message and now knows its IP address and the server's IP address. Using this information the peripheral 64 can access the server 34 and download an operating system using a simple protocol such as TFTP (Trivial File Transfer Protocol). Once the peripheral has downloaded an operating system (in this embodiment JAVA® OS) it can store this operating system in the FLASH EPROM 82. This has the advantage that when the peripheral 64 is powered-up again it can load the operating system directly from the EPROM 82; however, the peripheral 64 will still need to obtain an IP address from the server 34 using BOOTP.

When the peripheral 64 has received its IP address and its operating system, it can then use the TCP/IP protocol to download its application software module from the server 34 to the volatile memory 80.

One advantage of using router 68 is that the router 68 can auto-detect how much bandwidth the ethernet card 66 within each peripheral 64 requires (for example, whether it requires 10Mbytes per second or 100Mbytes per second). Most of the peripherals, for example, card reader 64a, receipt printer 64b, and cash dispenser 64c only receive large amounts of information (software) when they are downloading software modules; at other times they only send or receive small amounts of information; thus, these peripherals 64a,b,c can operate on a low bandwidth channel (10Mbytes per second). However, the user interface peripheral 64d frequently downloads large amounts of information to update the display; so peripheral 64d operates using a high bandwidth channel (100Mbytes per second).

Another advantage of using a router 68 is that the router 68 may ensure that any messages which are sent by one peripheral (e.g. 64a) within the ATM 62 to another peripheral (e.g. 64b) within the same ATM 62 are not transmitted to the server 34 or to any other terminal in the network 60. This reduces the amount of traffic on the network 60 without adversely affecting communication between peripherals 64.

When a peripheral 64 has downloaded all necessary software modules from the server 34 then it is ready for use by the terminal 62. The terminal 62 may use one of a number of possible application architectures. For example, in one architecture a master/slave relationship exists, where the user interface peripheral 64d is the master and the other peripherals 64a,b,c are the slaves. The user interface 64d controls the application flow and instructs the other peripherals 64a,b,c to carry out specific tasks (e.g. the card reader may be instructed to read a card, the receipt printer may be instructed to print a receipt) as required. The user interface 64d issues commands over the sub-network 71 using TCP/IP.

In an alternative architecture a peer to peer relationship exists between the peripherals 64a,b,c,d so that the peripherals 64 send message objects to each other to inform one another when significant application events occur. The peripherals 64 thereby operate in response to one another.

One advantage of the invention is that software upgrades are easily achieved by upgrading the software held on server 34 and restarting the peripherals 64 either directly at ATM 62 or via server 34. This allows for the remote administration of the entire transaction network 60 (which may include a large number of ATMs).

The ability of peripherals 64 within an ATM 62 to dynamically load required software modules provides for an efficient and easily controllable mechanism for supporting the required functionality. For example, if card reader 64a is to recognise different types of Smart card and standard magnetic stripe cards then card reader 64a requires different software drivers depending on which type of card is inserted into the card reader 64a. These software drivers must be available and accessible to support the different types of electrical interfaces, data streams and communications protocols for each type of card.

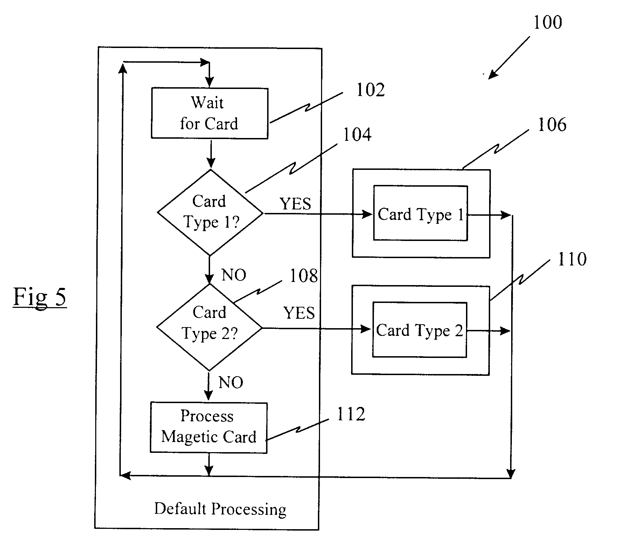

By allowing the card reader 64a to download software modules from the server 34 as and when required the card reader 64 can load software modules during operation. Thus, if a user inserts a Smart card, and the card reader 64a is currently configured for a magnetic stripe card (i.e. the card reader 64a has downloaded software driver modules for a magnetic stripe card), then the card reader 64a on detecting that the inserted card is a certain type of Smart card will download the relevant software module for use in processing that type of Smart card, as will be described with reference to Fig 5.

The flow chart of Fig 5 illustrates the steps 100 implemented by a card detection software module for recognising two types of Smart card. On powering-up, the card reader 64a will download this card detection software module and also a card driver software module, which by default is the software module for a magnetic stripe card. The ATM 60 then waits for a card to be inserted.

On detecting that a card is being inserted into card reader 64a the card detection software module provides for the required electro-mechanical operation to receive the card (e.g. the opening of shutters and the energising of drive motors as required) and then identifies the type of card that has been inserted in accordance with the flow chart of Fig 5.

Conventional ATMs which can read more than one type of card require all of the necessary software driver modules for the types of card which can be read to be available at all times during operation of the ATM. This is implemented by the ATM storing all of the required software driver modules locally. However, in ATM 62 it is only necessary to store the card detection software module because the required software driver module can be downloaded when it is needed.

The card detection software module recognises only two types of Smart card; however, if it is desired to support additional types of card then the card detection software module only needs to be increased in size by a small amount sufficient to support the extra decision block and card type identification. Conversely, a traditional card reader would need to have its program increased by the total size of the routines required to process the extra type of card or application embedded in the card. Similar considerations apply to other modules such as the receipt printer 64b and the cash dispenser 64c.

Referring to Fig 5, the card detection software module awaits insertion of a card (step 102). Once a card has been inserted, the software detects the card and determines if the card is a type one Smart card (step 104). If the card is a type one Smart card then the processor 74 (see Fig 4) downloads a type one software driver module (step 106) from the server 34. When the type one software has been successfully downloaded the ATM 62 (see Fig 4) processes the transaction.

If the card is not a type one Smart card then the software determines if the card is a type two Smart card (step 108). If the card is a type two Smart card then the processor 74 (see Fig 4) downloads a type two software driver module (step 110). When the type two software has been successfully downloaded the ATM 62 (see Fig 4) processes the transaction.

If the card is neither a type one nor a type two Smart card then the software module assumes that the card is a magnetic stripe card and uses (step 112) the magnetic stripe card driver software module (which in this embodiment is downloaded as the default driver). The ATM 62 (see Fig 4) then processes the transaction.

In the embodiment of Fig 3, the server 34 may provide Internet or Intranet access, thereby allowing the receipt printer 64b to load Web pages from the server 34, in addition to loading the appropriate printer driver software modules needed to support the graphics, fonts and other imagery in the downloaded Web pages. Such software modules may be resident in server 34 and loaded to the printer 64b only as and when required. These software modules consist of code and data, so it is possible to load individual graphic imagery, along with its own printer driver software, for customising receipts, statements and the like. It may be desirable to customise receipts and/or statements to promote a certain product or brand, or for tailoring the receipt to the user. These graphic images are transitory: taking up memory space in the printer module 64b only for the duration of their task (i.e. until they have been used by the computer).

Since each peripheral 64 has an independent connection to server 34 through a communication link, the peripheral 64 can communicate directly and independently with the server 34 not only to download software modules therefrom, but also to obtain data specific to a current transaction while the transaction is taking place. For example a request may be made for information specific to the user and appropriate to conduct the current transaction. Thus, cash dispenser 64c may require the user's current balance for determining if the user has sufficient funds for a requested cash withdrawal. User interface 64d may require account balance and bank statement information for presenting to the user.

Since each peripheral in ATM 62 is individually connected to server 34 the latest version of a particular software module can be made available to all ATMs in the network 60 by loading the new version of the software module into the server 34. This does not require physical access to any of the terminals in the network 60. In addition, terminal-specific software modules can be made available at the server 34. Such terminal-specific software modules may comprise marketing messages for display at the ATM 62.

By having a direct connection from the peripherals 64 to the server 34 it is possible to allow the peripheral software applications to take a more active role in the overall operational flow of the ATM 62. This allows the user interface processor to concentrate on its primary task of providing user interface display graphics, animation and video facilities. The processing power required to operate individual peripherals 64 can then be selected to optimise the cost/performance ratio.

It is desirable to monitor the operation of the peripherals 64 and for this purpose various logs and hardware tallies can be provided for. The embedded processor 74 (see Fig 4) in a peripheral 64 can be arranged to generate such logs and tallies for use with an embedded Web server for reporting the results. Access points can be provided over the network 60 to allow for diagnostic operations including the downloading of monitoring information. The reports can be in HTML form thus allowing a standard Web browser to access the information.

Various modifications may be made to the above described embodiments. For example, in other embodiments, an ATM may be used as a general multi-media dispenser, where the media to be dispensed ranges from paper (in the form of currency notes, tickets, and books of stamps) to plastics media (such as ski passes). This requires the ability to dispense media types having different dispensing characteristics (such as timing and control parameters). Appropriate software modules can be readily downloaded by a media dispenser from a server at run time without the need to store every possible driver software module in the terminal housing the dispenser. In other embodiments, a different network protocol (such as an RS-232-based protocol) and different boot-up protocols may be used.

In other embodiments, a different network architecture to that shown for sub-network 71 may be used, for example the router function may be implemented by one of the peripherals such as the user interface so that the user interface has a dual port arrangement: one port for connecting to cable 72 and another port for connecting to the other peripherals (e.g. card reader 64a, receipt printer 64b, cash dispenser 64c) optionally via a concentrator. This may be used to provide the user interface with a high bandwidth connection to the server 34 for application and graphics download; whereas, the other peripherals (64a,b,c) operate at a lower bandwidth. The routing functions may be implemented in software. Both ports may include ethernet cards for providing a network connection; alternatively, the port connected to the server 34 may use a modem for establishing a connection with the server 34.

The processor 74 may not include a JAVA® virtual machine but may execute native machine code.

## Claims

1. A transaction network (30 or 60) comprising a server (34) and at least one terminal (50 or 62), each terminal (50 or 62) having a plurality of peripherals (52 or 64), the network being characterised in that the server (34) is arranged to store software for the peripherals (52 or 64), and communication links (33,54,55 or 71) are provided from the server (34) to each peripheral (52 or 64), whereby each peripheral (52 or 64) is operable to download software from the server (34).

2. A transaction network according to claim 1, where each peripheral (52 or 64) is operable to configure itself using the downloaded software.

3. A transaction network according to claim 1 or claim 2, where the software stored on the server (34) includes application software and peripheral driver software.

4. A transaction network according to any preceding claim, where each peripheral (52 or 64) includes an embedded processor (74) which operates with the communication links (71) to download software from the server (34).

5. A transaction network according to claim 4, where each peripheral (52 or 64) includes hardware control means (76) for controlling the hardware of the peripheral (52 or 64), and the embedded processor (74) operates the hardware control means (76) in a manner determined by the downloaded software.

6. A transaction network according to any preceding claim, where each peripheral (52 or 64) has a non-volatile memory (82) for storing boot-up information, whereby, on powering the peripheral (52 or 64), the contents of the non-volatile memory (82) may be used for initialising the peripheral (52 or 64).

7. A transaction network according to any preceding claim, where the peripherals (52 or 64) communicate with the server (34) using the TCP/IP protocol.

8. A transaction network according to any preceding claim, where the communication links (33,54,55 or 71) also enable the peripherals (52 or 64) of a terminal (50 or 62) to communicate with each other.

9. A transaction network according to any preceding claim, where the peripherals (52 or 64) are selected from the following peripherals, namely: a user interface (64d), a card reader (64a), a receipt printer (64b) and a cash dispenser (64c).

10. A transaction network according to any preceding claim, where an information database (12) is in communication with the server (34).

11. A transaction network according to any preceding claim, where the communication links (33,54,55 or 71) include a router for concentrating information from the peripherals and transmitting that information across a single connection.

12. A transaction terminal (50 or 62) having a plurality of peripherals (52 or 64), the terminal being characterised in that each peripheral (52 or 64) has communication hardware (54 or 66) for connecting to a server (34), whereby, in use, each peripheral (52 or 64) is operable independently to access the server (34) and to download software therefrom.

13. A transaction terminal according to claim 12, where the peripheral communication hardware (54 or 66)is an ethernet card.

14. A transaction network system comprising a server (34) and at least one terminal (50 or 62), each terminal (50 or 62) containing a plurality of peripherals (52 or 64), the network system being characterised in that the server (34) is arranged to store a plurality of independent software modules, where at least one software module is associated with each peripheral (52 or 64), and communication links (33,54,55 or 71) are provided from the server (34) to each peripheral (52 or 64), whereby each peripheral (52 or 64) is operable to download one or more of the independent software modules from the server (34) and to configure itself using the one or more downloaded software modules.

15. A transaction network system comprising a server (34) and at least one terminal (50 or 62), each terminal containing a plurality of peripherals(52 or 64), the network system being characterised in that the server (34) is arranged to store a plurality of independent software modules, where at least one software module is associated with each peripheral (52 or 64), and communication links (33,54,55 or 71) are provided from the server (34) to each peripheral, wherein the server (34) is operable to reset the peripherals (52 or 64) and download software modules to the peripherals (52 or 64) after they power up.
